(19)

**Europäisches Patentamt**

**European Patent Office**

**Office européen des brevets**

(11) **EP 4 617 712 A1**

(12) **EUROPEAN PATENT APPLICATION**

(43) Date of publication:
**17.09.2025 Bulletin 2025/38**

(21) Application number: **24162793.4**

(22) Date of filing: **11.03.2024**

(51) International Patent Classification (IPC):
*G01S 7/41* *(2006.01)*     *G01S 13/34* *(2006.01)*
*G01S 13/58* *(2006.01)*    *G01S 13/536* *(2006.01)*
*G01S 13/538* *(2006.01)*   *G01S 7/292* *(2006.01)*
*G01S 13/42* *(2006.01)*     *G01S 13/931* *(2020.01)*

(52) Cooperative Patent Classification (CPC):
**G01S 13/343; G01S 7/414; G01S 7/415;**
**G01S 13/536; G01S 13/538; G01S 13/584;**
G01S 7/2922; G01S 7/2927; G01S 13/42;
G01S 13/931

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Infineon Technologies AG**
**85579 Neubiberg (DE)**

(72) Inventor: **GOVINDA KAMMATH, Abhilash**
**85579 München (DE)**

(74) Representative: **2SPL Patentanwälte PartG mbB**
**Landaubogen 3**
**81373 München (DE)**

Remarks:
Amended claims in accordance with Rule 137(2) EPC.

(54) **RADAR DEVICE AND RADAR PROCESSING METHOD**

(57) The present disclosure relates to a radar device (100; 140) configured to determine, for at least one radar frame which includes a plurality of chirps emitted by a radar device, a range-Doppler map (500). Range bins along a first dimension of the range-Doppler map (500) represent ranges relative to the radar device and Doppler bins along a second dimension of the range-Doppler map (500) represent Doppler-shifts. Radar device (100) is configured to, for each of the range bins, combine the Doppler bins associated with the respective range bin to generate a vector (510) indicating whether or not a target is detected in any of the corresponding Doppler bins. Radar device (100) is further configured to, based on the vector (510; 530; 530'; 540), determine whether a source of clutter is present within a field of view of the radar device and a location of the source of clutter in said field of view.

FIG. 5

## Description

## Field

The present disclosure relates to radar systems and, more particularly, to radar systems for moving clutter identification and localization.

## Background

Radar is a technology that uses radio waves to detect and locate objects. It operates by sending out radio waves and listening for any echoes that bounce back from objects, allowing it to determine the object's position, velocity, and other characteristics. For frequency-modulated continuous-wave (FMCW) radar systems, for example, it is known to obtain information on range, speed, and angles of objects, e.g. by performing multiple Fast Fourier Transforms (FFTs) on samples of radar mixer outputs. A first FFT, also commonly referred to as range FFT, yields range information. A second FFT across the range transformed samples, also commonly referred to as Doppler FFT, yields speed information. The first and second FFTs yield a so-called 2D range-Doppler map comprising range and speed (FFT) bins. For multiple-input multiple-output (MIMO) systems, a third FFT involving phase information of signals of different antenna elements of an (virtual) antenna array can yield additional spatial or angular information - so-called Direction-of-Arrival (DoA) information.

Moving clutter in radar refers to unwanted radar returns from objects that are not the primary targets of interest but are moving and thus create Doppler shifts similar to those of true targets. This can pose several problems for radar operation and signal processing. For example, moving clutter can be interpreted as legitimate targets, leading to false detections. For example, in a traffic monitoring radar system, moving tree branches or other non-vehicle objects could be mistakenly identified as vehicles. Further, clutter can mask actual targets, especially when the target and clutter have similar Doppler frequencies. A small vehicle moving at the same speed as surrounding clutter may not be distinguishable from the clutter. Modern radar systems often adaptively allocate processing resources based on the detection environment. Excessive moving clutter can lead to inefficient resource utilization as the system expends resources to process and track false targets. Without effective clutter mitigation techniques, a false alarm rate can increase, which may reduce an operator's trust in the system and lead to missed detections of actual targets due to desensitization.

Thus, there is a need for improved handling of (moving) clutter in radar devices.

## Summary

This demand is met by radar devices and methods in accordance with the independent claims. Further beneficial embodiments are addressed by the dependent claims.

According to a first aspect, the present disclosure proposes a radar device configured to determine, for at least one radar frame which includes a plurality of chirps emitted by a radar device, a range-Doppler map for the radar frame. Range bins along a first dimension of the range-Doppler map represent ranges/distances relative to the radar device. Doppler bins along a second dimension of the range-Doppler map represent Doppler-shifts/velocity. The range-Doppler map can be a binary-valued (TRUE, FALSE) or a non-binary-valued map (e.g., real- or complex-valued). The radar device is configured to, for each of the range bins, combine the Doppler bins associated with the respective range bin to generate a vector indicating whether or not an object is detected in any of the corresponding Doppler bins. The vector can be a binary-valued (TRUE, FALSE) or a non-binary-valued vector (e.g., real- or complex-valued). The radar device is configured to, based on the vector, determine whether a source of clutter is present within a field of view of the radar device and a location (e.g., distance) of the source of clutter in said field of view. By combining the Doppler bins associated with the respective range bins, the range-Doppler map may thus be compressed from two dimensions to one dimension (vector). The one dimension of the vector may be sufficient to derive information on (moving) clutter.

In some embodiments, the radar device is a (digital) signal processing circuit to (digitally) process received radar signals. Thus, the radar device may comprise a digital signal processor (DSP) or a Field-Programmable Gate Array (FPGA) to perform various operations such as Fast Fourier Transform (FFT) for range and Doppler estimation, filtering, and signal analysis.

In some embodiments, the range-Doppler map is binary-valued. The radar device is configured to, for each of the range bins, combine the Doppler bins associated with the respective range bin by a logical OR-operation to generate the vector. Thus, a vector entry corresponding to a range bin may be generated by OR-ing all Doppler bins associated with the respective range bin. Therefore, the resulting vector may be a binary vector in some embodiments. The binary-valued vector may be regarded as an ingredient to make statements on (moving) clutter.

In some embodiments, the radar device is configured to determine, for a plurality of radar frames, a plurality of respective vectors based on the respective range-Doppler maps. Thus, a number of resulting vectors may correspond to a number of radar frames for which a respective vector has been obtained by compressing the range-Doppler map of the radar frame. The radar device may be configured to combine the plurality of vectors to determine whether the source of clutter is present and the location of the source of clutter. The combination of the plurality of vectors may be a linear (e.g., weighted sum) or a nonlinear combination (e.g., logical OR).

In some embodiments, the radar device is configured to accumulate the plurality of vectors (corresponding to the plurality of radar frames) to obtain an accumulated vector. For example, the accumulation may correspond to a weighted sum of the plurality of vectors. The radar device may be configured to determine the presence of the source of clutter within a range bin in response to an entry of the accumulated vector and associated with the range bin exceeding a predefined threshold. Thus, if the accumulation of vector entries associated with a specific range bin exceeds the threshold, the presence of the source of clutter for that range bin may be confirmed.

In some embodiments, the radar device is configured to determine, for a first plurality of radar frames (e.g., a first virtual frame), a first plurality of respective vectors based on the respective range-Doppler maps and combine the first plurality of vectors to obtain a first (combined) vector for the first plurality of radar frames. Again, the combination of the first plurality of vectors may be a linear or a nonlinear combination. For example, the combination of the first plurality of vectors may be a logical OR-operation. The radar device may be further configured to determine, for at least a second plurality of radar frames (e.g., a second virtual frame), a second plurality of respective vectors based on the respective range-Doppler maps and combine the second plurality of vectors to obtain a second (combined) vector for the second plurality of radar frames. The combination of the second plurality of vectors may be a linear or a nonlinear combination. For example, the combination of the second plurality of vectors may be a logical OR-operation. The radar device may be further configured to accumulate the first and the second (combined) vectors to obtain an accumulated vector. For example, the accumulation may correspond to a weighted sum of the first and the second vectors. The radar device may be further configured to determine the presence of the source of clutter within a range bin in response to an entry of the accumulated vector and associated with the range bin exceeding a predefined threshold. Thus, if the accumulation of vector entries associated with a specific range bin exceeds the threshold, the presence of the source of clutter for that range bin may be confirmed.

In some embodiments, the radar device is configured to accumulate the vectors by incrementing an entry of the accumulated vector by a first value if the respective entry of a newly accumulated vector has a first vector value (e.g., TRUE) and by decrementing the entry of the accumulated vector by a second value if the respective entry of the newly accumulated vector has a second vector value (e.g., FALSE). In some embodiments, the first and the second values may be different values. In particular, the first value may be larger than the second value. Thus, in case of accumulating binary-valued vectors, a vector entry of TRUE may be given a higher weight than a vector entry of FALSE. In some embodiments, this may be vice versa.

In some embodiments, the radar device is configured to cause a low-power-mode of the radar device in response to a source of clutter having been detected in the field of view of the radar device. This may save power if only clutter instead of actual targets are detected.

In some embodiments, the radar device further comprises a transmitter configured to transmit the at least one radar frame comprising a plurality of transmit FMCW chirps, and a receiver configured to receive one or more echo signals of the radar frame from the one or more radar targets and mix the one or more echo signals with the transmit FMCW chirps to obtain a beat signal for the radar frame. Thus, the radar device may also comprise further components, such as transmitter, receiver, mixer, analog-to-digital converter (ADC), signal processing unit, and so forth. Thus, the radar device may be a complete radar MMIC (Monolithic Microwave Integrated Circuit).

In some embodiments, the radar device is configured to perform, for each FMCW chirp of the radar frame, a range FFT of the beat signal to obtain the range bins of a range-Doppler map. The radar device is configured to perform, for each range bin, a Doppler FFT on the FMCW chirps of the radar frame to obtain the Doppler bins of the range-Doppler map.

In some embodiments, the radar device is configured to perform Constant False Alarm Rate (CFAR), processing on the range-Doppler map to obtain the range-Doppler map as a binary range-Doppler map. CFAR may improve separating stationary clutter from moving clutter.

According to a further aspect, the present disclosure proposes a radar processing method. The method includes determining, for at least one radar frame which includes a plurality of chirps emitted by a radar device, a range-Doppler map. Range bins along a first dimension of the range-Doppler map represent ranges relative to the radar device and Doppler bins along a second dimension of the range-Doppler map represent Doppler-shifts. The method further includes, for each of the range bins, combining the Doppler bins associated with the respective range bin to generate a vector indicating whether or not a target is detected in any of the corresponding Doppler bins. The method further includes, based on the vector, determining whether a source of clutter is present within a field of view of the radar device and a location of the source of clutter in said field of view.

Embodiments of the present disclosure are based on the principle that moving clutter (e.g., fan clutter) detections primarily occur at consistent ranges, regardless of their Doppler characteristics. This can be detected by applying a Constant False Alarm Rate (CFAR) technique together with a persistency filter on the range spectrogram or utilizing a persistency filter on range-Doppler detections. By appropriately selecting the Doppler resolution, instead of masking the clutter range, it is possible to assign weights to the Doppler bins based on the range bin of the fan or any moving clutter. Alternatively, applying a persistency filter can enhance the detection probability of genuine human targets while eliminating false alarms. The proposed approach is computationally cheap and less costly to implement in a lightweight processor or controller or even a bare silicon.

**Brief description of the Figures**

Some examples of apparatuses and/or methods will be described in the following by way of example only, and with reference to the accompanying figures, in which

Fig. 1     shows a block diagram of a conventional radar signal processing chain;

Fig. 2     shows a 2D j oint range-Doppler estimation with FMCW radar; Figure index for y axis is mile/hour while x axis in meters;

Fig. 3     shows an illustrative example of two successive FMCW radar frames;

Fig. 4     illustrates azimuth angle estimation using a uniform linear antenna array;

Fig. 5     shows an illustrative example of a range-Doppler map and a vector indicating whether or not an object is detected in any of the Doppler bins;

Fig. 6     shows an illustrative example of a virtual frame map and an accumulated vector;

Fig. 7     shows an illustrative example of a virtual frame map and a logically combined vector;

Fig. 8     shows an illustrative example of two logically combined vectors and a resulting accumulated vector;

Fig. 9     shows a flowchart of a radar processing process;

Fig. 10A   shows a flowchart of a first variant of clutter identification and localization; and

Fig. 10B   shows a flowchart of a second variant of clutter identification and localization.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

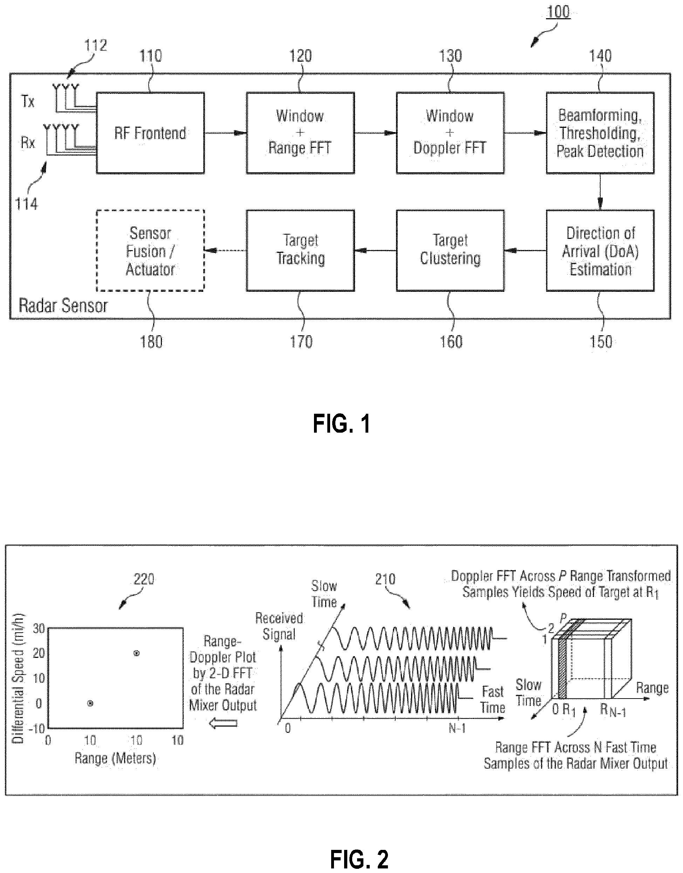

**Fig. 1** shows a block diagram of a radar device 100 which may implement embodiments of the proposed clutter detection concept.

Radar device 100 may comprise a Radio Frequency (RF) transceiver frontend 110 used to generate transmit (Tx) radar signals that can be emitted via one or more transmit antennas 112 of the radar device 100. The radar signals can be in frequency bands ranging from 3 MHz to 300 GHz. Radar systems may operate at bands in or around 24 GHz, 60 GHz and 77 GHz portions of the electromagnetic spectrum known as mm-wave frequencies so that adequate velocity and range resolution can be achieved. One or more receive (Rx) antennas 114 are used to receive electromagnetic waves (radar signals) reflected off objects. Radar operation involves range (distance), relative velocity, and possibly direction estimation. The latter can be done when using more than one receive antenna in an receive antenna array. Radar systems using both multiple transmit and multiple receive antennas are commonly referred to as MIMO radars. For proper transmit antenna spacing, the MIMO radar can emulate a larger aperture phased array radar. This larger array can be called a virtual array.

Radar device 100 may further comprise a range processor 120 downstream to the RF transceiver frontend 110 and configured to perform range estimation. A range $R$ to a target, can be determined based on the round-trip time delay that the electromagnetic waves take to propagate to and from that target: $R = (c\tau/2)$, where $\tau$ is the round-trip time delay in seconds and $c$ is the speed of light in meters per second. Thus, the estimation of $\tau$ enables the range measurement. For example, pulse-modulated continuous waves (CWs) can comprise periodic and short power pulses and silent periods. Silent periods allow the radar to receive the reflected signals and serve as timing marks for radar to perform range estimation. With a pulsed radar configuration that uses frequency modulated (FM) CW pulses, simultaneous range-velocity estimation in multitarget traffic scenarios can be provided. A FMCW radar transmits periodic FMCW chirps (also referred to as pulses or ramps), whose frequency may, for example, increase linearly during the pulse. The receive signal reflected from a target is conjugately mixed with the transmit signal to produce a low-frequency beat signal (also referred to as baseband signal), whose frequency gives the range of the target. This operation can be repeated for $P$ consecutive FMCW chirps. Two-dimensional (2D) waveforms 210 in **Fig. 2** depict successive reflected chirps arranged across two time indices $p, n$. The so-called slow time index $p$ simply corresponds to the chirp number. On the other hand, the so-called fast time index $n$ assumes that for each chirp, the corresponding continuous beat signal is sampled with sampling frequency $f_s$ to collect $N$ samples within a chirp duration $T$.

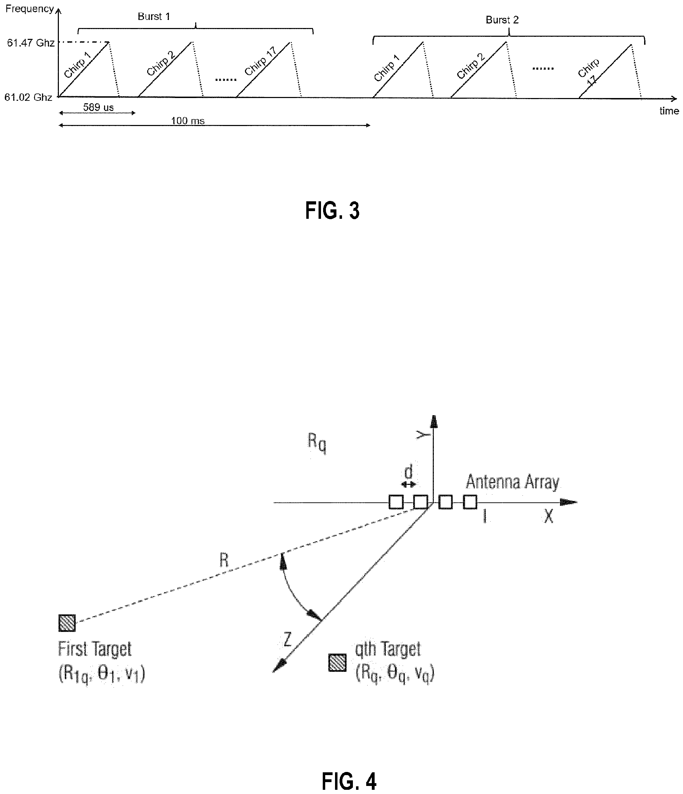

**Fig. 3** shows an illustrative example of two successive FMCW radar frames, "burst 1" and "burst 2". Each FMCW radar frame comprises (or consists of) $P$ = 17 FMCW chirps, each having a duration of 589 $\mu$s. The frequency increases linearly from 61.02 GHz to 61.47 GHz during each chirp. The duration of each FMCW radar frame is 100 ms, leading to a frame rate of 10 Hz. The beat signal of each FMCW chirp may be sampled with sampling frequency $f_s$ = 1.50943 MHz, leading to $N$ = 128 samples per chirp.

Turning back to Fig. 1, the range processor 120 can be configured to perform a first discrete Fourier transform (e.g., FFT) across the fast time $n$ to obtain beat frequency $f_b$ coupled with Doppler frequency $f_d$. This operation is also commonly known as range FFT or range gating. The range FFT is applied on fast time samples of chirps (beat signal) and may be performed on raw ADC data on each of the Rx and chirps of the radar. Mean removal in fast time samples may optionally be performed before the range FFT to remove a mean value (DC offset) of the sampled beat signal of each chirp and each Rx. Slow time MTI (Moving Target Indicator) may optionally be applied between chirps on each of the Rx to remove static clutters. MTI may be designed to filter out stationary targets and clutter by exploiting the Doppler shift caused by the motion of targets. Slow Time MTI specifically looks at the Doppler information across several chirp repetition intervals. Slow Time MTI utilizes the fact that stationary objects will not produce a Doppler shift, while moving objects will. By examining a phase change of the received signal over a series of chirps (slow time), the system can differentiate between stationary and moving targets. Slow Time MTI may involve integrating the radar returns over several chirp repetition intervals to enhance detection of moving targets. This integration can improve a signal-to-noise ratio (SNR) and make it easier to detect targets with slight movements.

Various filtering techniques, such as digital moving target indication (DMTI) filters, can be applied in the slow time domain to remove (static) clutter. These filters allow frequencies (Doppler shifts) associated with moving targets to pass while suppressing the zero-Doppler frequency components from stationary objects.

The Range FFT then allows the estimation of Doppler shift corresponding to a unique range gate or bin by the application of second Fourier transform (e.g., FFT) across the slow time. This second FFT is also commonly known as Doppler FFT and can be done by speed processing element 130 of radar device 100. The Doppler FFT is thus applied on slow time axis to identify moving objects/targets. Thus, a range-Doppler map 220 can be generated by using a 2D FFT, see Fig. 2. Range bins along a first dimension of the 2D range-Doppler map represent ranges of objects relative to a radar device and Doppler bins along a second dimension of the 2D range-Doppler map represent Doppler-shifts (velocity) of the objects. An example range-Doppler map 220 illustrated in Fig. 2 shows two objects, a first one at 10 m distance and 0 miles/hour relative speed, and a second one at 20 m distance at 20 mi/h relative speed. The objects can be subregions of interest of the range-Doppler map.

So far, it has been assumed that radars only receive the reflection from targets of interest, such as vehicles traveling in front. However, in addition to direct reflections from a target of interest, the radar also receives reflections from fans, road debris, guard rails, and walls, for example. This unwanted return at the radar is called clutter. The amount of clutter in the system changes as the surrounding environment varies. Hence, adaptive algorithms such as constant false alarm rate (CFAR) processing and space-time adaptive processing (STAP) can be used to mitigate the effect of clutter. To identify valid targets in the presence of clutter, a threshold for the target detection should be properly chosen. If the amplitude of the range-Doppler map at an estimated range is greater than some threshold, for example, the target can be said to be detected. Thus, the threshold should depend on the noise (e.g., clutter) in the given system. As clutter increases, a higher threshold may be chosen. A simple CFAR method based on cell or bin averaging can use a sliding window to derive the local clutter level by averaging multiple range bins. This described threshold selection and target (peak) detection is performed in signal processing block 140 outputting a (binary-valued) range Doppler CFAR map.

The use of wideband pulses, such as FMCW pulses, provides discrimination of targets in both distance and velocity. The discrimination in direction can be made using a multi-antenna array, such as in multi-antenna radar systems. Multi-antenna radar systems can employ multiple transmitters, multiple receivers, and multiple waveforms to exploit all available degrees of freedom. To spatially resolve targets and deliver comprehensive representation of the traffic scene, angular location of targets can be estimated. Therefore, in automotive radars, the location of a target can be described in terms of a spherical coordinate system ($R$, $\theta$, $\rho$), where ($\theta$, $\rho$) denote azimuthal and elevation angles, respectively. A single antenna radar setup is sufficient to provide a range-velocity map but insufficient to provide angle information since the measured time delay lacks the information in terms of angular locations of the targets. To enable direction estimation, the radar is configured to receive reflected waves with multiple antennas. For example, locating a target using electromagnetic waves in two dimensions requires the reflected wave data from the object to be collected in two distinct dimensions. These distinct dimensions can be formed in many ways using combinations of time, frequency, and space across receive antennas. For instance, a linear receive antenna array 114 and wideband waveforms such as FMCW form two unique dimensions. Additionally, smaller wavelengths in mm-wave bands correspond to smaller aperture sizes and, thus, many antenna elements can be densely packed into an antenna array. Hence, the effective radiation beam, which is stronger and sharper, in turn increases the resolution of angular measurements.

Consider an antenna array located in plane $z$ =0, and let $l$ be the abscissa corresponding to each receiver antenna position, see **Fig. 4.** Let ($R_q$, $\theta_q$) be the position of the $q$-th target in spherical coordinates, moving with velocity $v_q$ relative to the radar. With the help of far field approximation, for the $q$-th target, the round-trip time delay between a transmitter located at the origin and the receiver positioned at coordinate $l$ can be expressed by

$$\tau_{lq} = \frac{2(R_q + v_q t) + ld \sin \theta_q}{c},$$

where $d$ is the distance between antenna elements (usually half the wavelength) arranged in a linear constellation. The delay term $\tau_{lq}$ creates uniform phase progression across antenna elements, which permits the estimation of the angle $\theta_q$ by FFT in spatial domain. Thus, 2D location (range and angle) and speed of targets can be estimated by a 3D FFT. The third angular FFT (Direction-of-Arrival, DoA, processing) may be performed in processing block 150 of the example radar signal processing block diagram of Fig. 1.

Further conventional radar processing can include target clustering 160, target tracking 170, and optional sensor fusion 180 with sensor data of other environmental sensor types (e.g., camera, lidar, etc.).

As mentioned above, moving clutter in radar can pose several problems for radar operation and signal processing. Radars are going to be used in various smart devices like speakers, TV, CO2 monitoring, etc. in industrial and home environments for motion and presence detection. Since majority of devices are battery powered, radar devices need to be operated in low power mode for majority of times. Due to moving clutters like fan in industrial and home environments, radar might detect these false targets mistakenly as real targets and operate at high power mode, consuming more power and drain the battery at a greater speed. In addition to it, these kinds of false targets can lead to errors in velocity or angle measurements and thereby affects the accuracy and reliability of the radar system. Hence, identifying these moving clutters like a fan is important to save the power of such smart devices and increase the accuracy and efficiency of radar system.

One approach to solve this problem is to use a machine learning approach. But this method is computationally heavy and costly and need more training samples. Thus, there is a need for improved handling of (moving) clutter in radar devices.

For this purpose, the radar device 100 is configured to determine a range-Doppler map for at least one radar frame which includes a plurality of chirps. As described above, the range-Doppler map may be computed using signal processing blocks 120, 130, and 140, for example. The skilled person having benefit from the present disclosure will appreciate that the (logical) signal processing blocks/circuits 120, 130, and 140 of radar device 100 may be implemented in hardware and/or in software. They may be implemented as separate hardware/software units or within a common hardware/software unit. For the ease of understanding, it will be generally referred to the radar device 100 in the following. However, the skilled person will appreciate that specific functionalities of the present disclosure may be implemented in any of the signal processing blocks/circuits 120, 130, and, in particular, signal processing block/circuit 140.

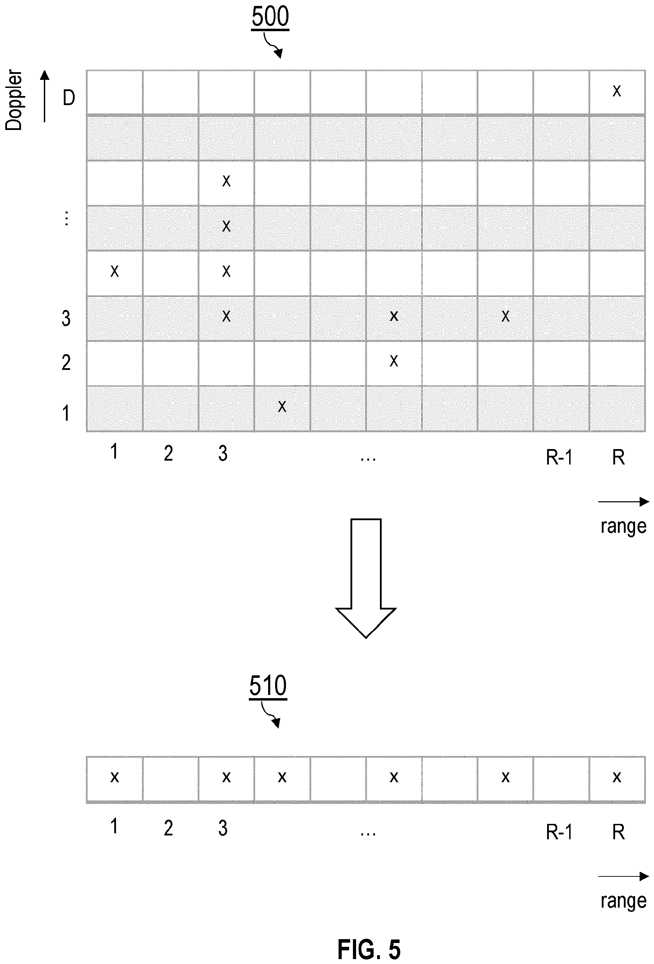

**Fig. 5** schematically illustrates a range-Doppler map 500 for one FMCW radar frame.

Range-Doppler map 500 is at least 2-dimensional (for one Rx antenna). Range bins along a first dimension (here: horizontal) of the range-Doppler map 500 represent ranges (distances) of objects relative to the radar device. The example range-Doppler map 500 has R range bins in accordance with a range resolution of the radar device 100. The number A of range bins may correspond to the number $N$ of fast time samples, i.e. $R = N$. Doppler bins along a second dimension (here: vertical) of the range-Doppler map 500 represent Doppler-shifts (velocities) of the objects relative to the radar device. The example range-Doppler map 500 has $D$ Doppler bins in accordance with a Doppler resolution of the radar device 100. The number $D$ of Doppler bins may correspond to the number $P$ of chirps per radar frame, i.e. $D = P$.

The symbol "x" in certain bins of range-Doppler map 500 represents a value indicating a respective object detected at a certain range and with a certain Doppler shift. The value "x" may be a binary or a non-binary value. Range-Doppler map 500 may be a binary-valued range-Doppler map due to previous CFAR processing, for example. Thus, the "x" may correspond to "1" in some embodiments. The empty bins may correspond to values of "0" or to values below a threshold, for example, indicating that no object is detected at this range and Doppler shift.

Moving clutter in a Range-Doppler map refers to unwanted radar echoes that are not from the primary targets of interest but from other moving objects or scatterers in the environment. These can include things like birds, waves, small surface objects, or even atmospheric disturbances. Moving clutter typically has a distinct Doppler/velocity signature different from stationary clutter. In a range-Doppler map, it can appear as spread along the Doppler axis (velocity axis) because these objects can have various speeds and directions. Unlike specific targets (like aircraft or ships), moving clutter often appears more randomly distributed or spread out over a larger area in the map. It might not have a compact or well-defined shape. Unlike stationary clutter, moving clutter can show changes over consecutive radar scans both in position (range) and velocity (Doppler shift), reflecting its dynamic nature.

In the illustrative example of Fig. 5, the range-Doppler map 500 indicates detected objects at (range = 1, Doppler = 4), (range = 3, Doppler = 3), (range = 3, Doppler = 4), (range = 3, Doppler = 5), (range = 3, Doppler = D-2), (range = 4, Doppler = 1), (range = 6, Doppler = 2), (range = 6, Doppler =3), (range = R-2, Doppler = 3), (range = R-2, Doppler = 3), and (range = R, Doppler = D).

The proposed radar device 100, e.g., at signal processing block/circuit 140 thereof, is configured to, for each of the $R$ range bins, combine the $D$ Doppler bins associated with the respective $r$-th ($r = 1, ..., R$) range bin in order to generate a 1-dimensional vector 510 indicating whether or not an object is detected in any of the corresponding $D$ Doppler bins. The resulting vector 510 is illustrated in the lower part of Fig. 5. For range bin 1, all $D$ Doppler bins associated with range bin 1 are combined to obtain a first element of vector 510 associated with range bin 1. For range bin 2, all $D$ Doppler bins associated with range bin 2 are combined to obtain a second element of vector 510 associated with range bin 2. For range bin 3, all $D$ Doppler bins associated with range bin 3 are combined to obtain a third element of vector 510 associated with range bin 3, and so forth. The resulting vector 510 has $R$ elements.

The combination of the corresponding Doppler bins may be any linear or nonlinear combination. An example of a linear combination would be a (weighted) sum of the corresponding Doppler bins to obtain an $r$-th element of vector 510 ($r = 1, ..., R$). An example of a nonlinear combination would be a logical combination of the Doppler bins associated with ra nge bin $r$ to obtain the $r$-th element of vector 510. In case of a binary-valued range-Doppler map 500, an example of a nonlinear combination would be a logical OR-combination of the Doppler bins associated with range bin $r$ bins to obtain the $r$-th element of vector 510. In the latter case, the $r$-th element of vector 510 would be TRUE if at least one of the Doppler bins associated with the $r$-th range bin of range-Doppler map 500 is TRUE. The $r$-th element of vector 510 would be FALSE if all of the Doppler bins associated with the $r$-th range bin of range-Doppler map 500 are FALSE. The resulting example vector 510 corresponding to the example binary-valued range-Doppler map 500 is shown in the lower part of Fig. 5.

The proposed radar device 100 (or the signal processing circuit 140) is configured to, based on the vector 510, determine whether a source of clutter is present within a field of view of the radar device and to determine a location of the source of clutter in said field of view. This can be done in various way. In the example illustrated in Fig. 5, potential clutter can be identified in range bins 1, 3, 4, 6, R-2, and R. However, to identify moving clutter more reliably, a plurality of (successive) radar frames should be processed.

For example, radar device 100 (or the signal processing circuit 140 thereof) may be configured to determine, for a plurality of $F$ consecutive radar frames, respective range-Doppler maps 500. The $F$ consecutive radar frames may be referred to as a virtual frame. The respective $F$ range-Doppler maps 500 may yield a virtual frame range-Doppler map of dimension $F \cdot D \times R$, with $R$ range bins, each having associated therewith $F \cdot D$ Doppler bins. Radar device 100 may be configured to combine, for each of the $R$ range bins, the $F \cdot D$ Doppler bins associated with the respective $r$-th range bin to generate vector 510 indicating whether or not a target is detected in any of the $F \cdot D$ corresponding Doppler bins. The combination of the $F \cdot D$ corresponding Doppler bins may be any linear or nonlinear combination. Here, vector 510 results from a compression of the virtual frame range-Doppler map including $F$ consecutive range-Doppler maps 500.

Another option to improve the identification of (moving) clutter may be to compute $F$ respective vectors 510 for each of the $F$ consecutive range-Doppler maps 500. Thus, the radar device 100 (or the signal processing circuit 140 thereof) may be configured to determine, for the plurality of $F$ radar frames, a plurality of $F$ respective vectors 510 based on the respective $F$ range-Doppler maps. Here, the radar device 100 (or the signal processing circuit 140 thereof) may either store the $F$ range-Doppler maps and the compute the $F$ respective vectors 510 or the radar device 100 (or the signal processing circuit 140 thereof) may compute the $F$ respective vectors 510 on a frame-by-frame basis. The latter may require less computer memory.

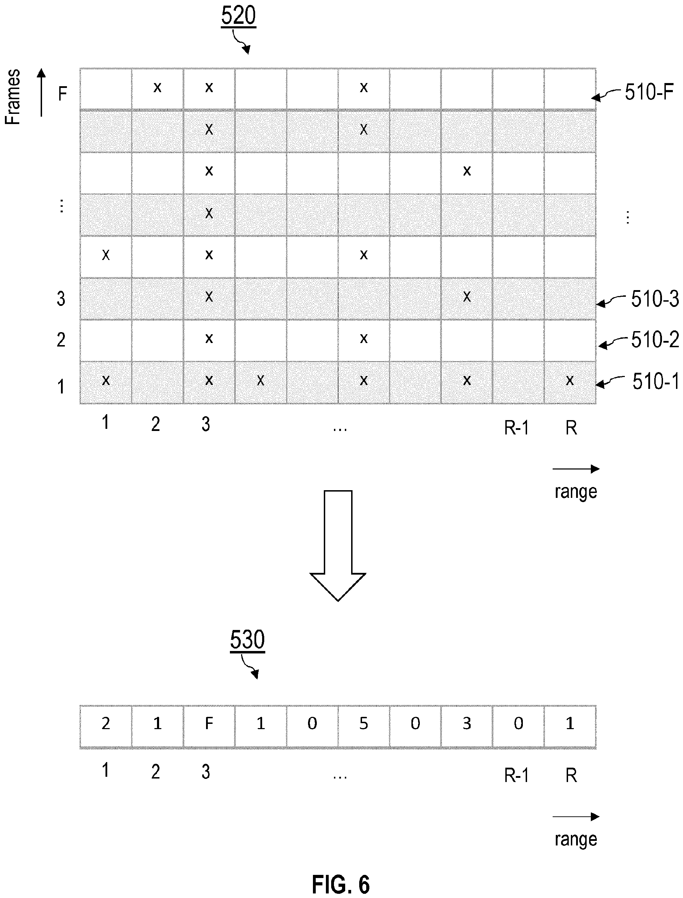

Then, the radar device 100 (or the signal processing circuit 140 thereof) may be configured to combine the plurality of $F$ vectors 510 to determine whether a source of clutter is present and the location of the source of clutter. The plurality of $F$ vectors 510 may be arranged in a virtual frame map 520 of dimension $F \times R$. An example of a virtual frame map 520 comprising the plurality of $F$ vectors 510 corresponding to a plurality of $F$ consecutive radar frames is illustrated in the upper part of **Fig. 6.** Virtual frame map 520 is of dimension $F \times R$.

The first vector 510-1 of virtual frame map 520 corresponds to vector 510 shown in Fig. 5 showing potential clutter in range bins 1, 3, 4, 6, R-2, and R. The second vector 510-2 of virtual frame map 520 corresponding to a second radar frame of the virtual frame shows potential clutter in range bins 3 and 6. The third vector 510-3 corresponding to a third radar frame of the virtual frame shows potential clutter in range bins 3 and R-2, and so forth. The F-th vector 510 corresponding to F-th radar frame of the virtual frame shows potential clutter in range bins 2, 3 and 6. The number F of radar frames is a design parameter and can take any integer value. For example, virtual frame length F could be larger than ten but smaller than 50, for example. The number F of radar frames could also be adaptively adjusted to different environments during operation of the radar device 100 (or the signal processing circuit 140 thereof). In general, $F \geq 1$.

The proposed radar device 100 (or the signal processing circuit 140 thereof) may be configured to combine the F vectors 510 of the virtual frame map 520 corresponding to the F consecutive radar frames to obtain a combined or accumulated vector 530 for virtual frame. The combination of the corresponding vector elements may be any linear or nonlinear combination. An example of a linear combination would be a (weighted) sum of the F vectors 510-1, ..., 510-F. In some embodiments, the radar device 100 (or the signal processing circuit 140 thereof) may be configured to combine or accumulate the F vectors 510-1, ..., 510-F by incrementing an r-th entry of the accumulated vector 530 by a first value (e.g., 1) if the r-th entry of a newly combined vector 510 is TRUE. In other words, if vectors 510-1 and 510-2 have already been combined, the r-th entry of the accumulated vector 530 is incremented by the first value (e.g., 1) if the r-th entry of the newly or additionally combined vector 510-3 is TRUE. The radar device 100 (or the signal processing circuit 140 thereof) may be configured to combine the F vectors 510-1, ..., 510-F by decrementing the r-th entry of the accumulated vector 530 by a second value (e.g., 0 or 0.5) if the r-th entry of the newly combined vector 510 is FALSE. In other words, if vectors 510-1 and 510-2 have already been combined, the r-th entry of the accumulated vector 530 is decremented by the second value (e.g., 0 or 0.5) if the r-th entry of the newly or additionally combined vector 510-3 is FALSE. The resulting accumulated vector 530 corresponding to a sum of the F vectors 510-1, ..., 510-F of virtual frame map 520 is shown in the lower part of Fig. 6.

The proposed radar device 100 (or the signal processing circuit 140 thereof) may be configured to, based on the accumulated vector 530, determine the presence of the source of clutter within an r-th range bin in response to an r-th entry of the combined vector exceeding a predefined threshold. In the illustrated example, the threshold may be "4", for example. In this case, (moving clutter) would be determined only in range bins "3" and "6" since these are the only range bins exceeding the threshold.

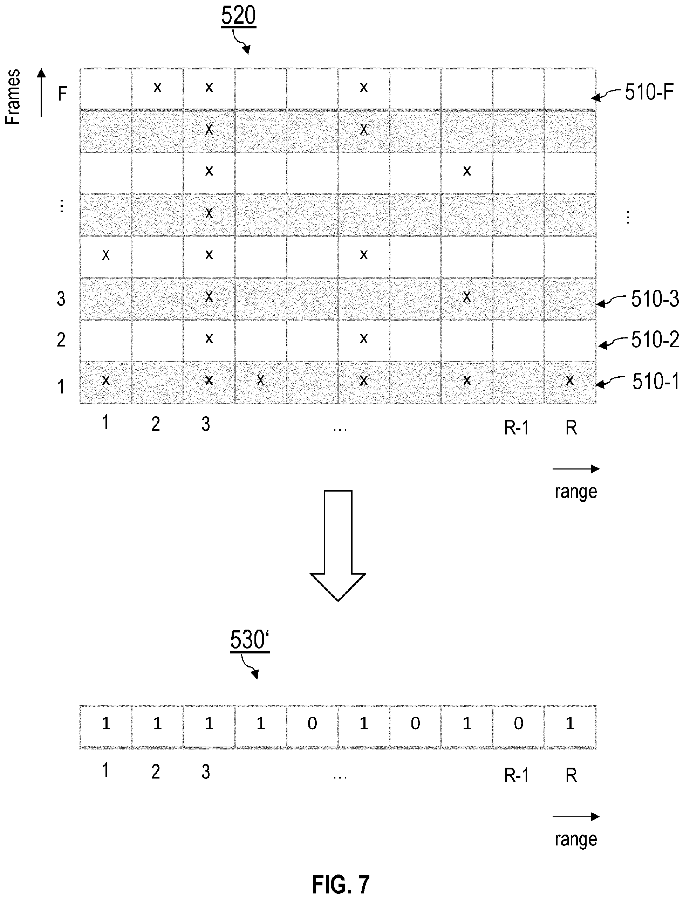

In another example implementation illustrated in **Fig. 7,** the proposed radar device 100 (or the signal processing circuit 140 thereof) may be configured to logically combine the F vectors 510 of the virtual frame map 520 corresponding to the F consecutive radar frames to obtain a combined vector 530' for the F consecutive radar frames in the virtual frame. In case of a binary-valued virtual frame map 520, an example of a logical combination would be a logical OR-combination of the r-th elements of the F vectors 510-1, ..., 510-F to obtain the r-th element of combined vector 530'. In this case, the r-th element of (binary-valued) combined vector 530' would be TRUE if at least one of the r-th elements of the F vectors 510-1, ..., 510-F is TRUE. The r-th element of combined vector 530 would be FALSE if all of the r-th elements of the F vectors 510-1, ..., 510-F are FALSE. The resulting binary-valued combined vector 530' corresponding to a logical OR-combination of the F vectors 510-1, ..., 510-F of virtual frame map 520 is shown in the lower part of Fig. 7.

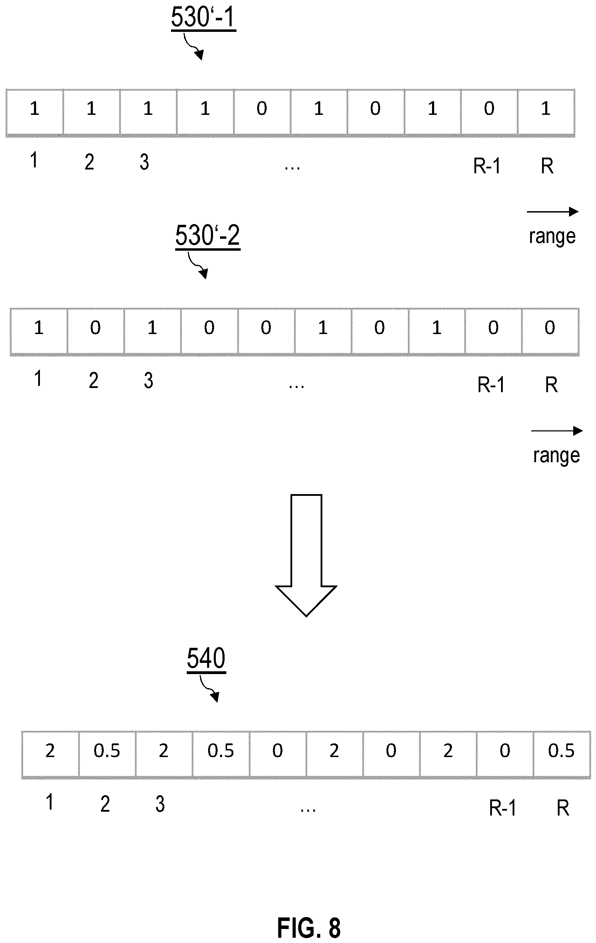

Such a binary-valued combined vector 530'-1 may be determined for a first plurality of radar frames corresponding to a first virtual frame. Another second binary-valued combined vector 530'-2 may be determined for a second plurality of radar frames corresponding to a second virtual frame. Examples of binary-valued combined vectors 530'-1, 530'-2 for two virtual frames are shown in **Fig. 8.** The first and the second plurality of radar frames may be overlapping in time or non-overlapping radar frames. The first and the at least second binary-valued combined vectors 530'-1, 530'-2 may be accumulated to obtain an accumulated vector. In some embodiments, the radar device 100 (or the signal processing circuit 140 thereof) may be configured to accumulate the binary-valued combined vectors 530'-1, 530'-2 by incrementing an r-th entry of the accumulated vector by a first value (e.g., 1) if the r-th entry of a newly added binary-valued combined vector is TRUE. The radar device 100 (or the signal processing circuit 140 thereof) may be configured to accumulate the binary-valued combined vectors by decrementing the r-th entry of the accumulated vector by a second value (e.g., 0 or 0.5) if the r-th entry of the newly added binary-valued combined vector is FALSE. Then, the radar device 100 (or the signal processing circuit 140 thereof) may be configured to determine the presence of the source of clutter within a range bin in response to an entry of the accumulated vector and associated with the range bin exceeding a predefined threshold. In the illustrated example, the threshold may be "1", for example. In this case, (moving clutter) would be determined only in range bins "3", "6", and "R-2" since these are the only range bins exceeding the threshold.

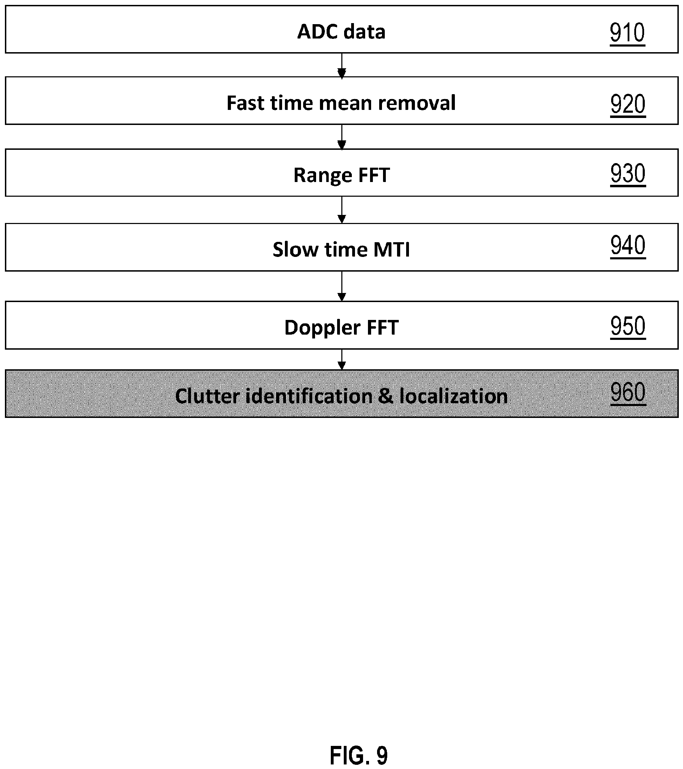

**Fig. 9** shows a flowchart of a radar processing process 900 according to embodiments of the present disclosure.

Radar processing process 900 includes sampling 910, fast time mean removal 920, range FFT 930, Moving Target Indication (MTI) in slow time 940, Doppler FFT 950, and the proposed clutter identification and localization 960.

At sampling act 910 the analog radar signal is sampled to convert it into a digital signal that can be processed by digital signal processing (DSP) algorithms. The TX radar signals transmitted by transmitting antenna are reflected by objects in scene and received by receiving antennas. The echo received by receiving antennas are mixed with a replica of the signal transmitted by transmitting antenna using respective mixers to produce respective intermediate frequency (IF) signals $x_{IF}(t)$ (also known as beat signals). Respective amplifiers may be used to receive the reflected radar signals from antennas. Beat signals $x_{IF}(t)$ may be respectively filtered with respective low-pass filters (LPFs) and then sampled by ADC. ADC is advantageously capable of sampling the filtered beat signals $x_{out}(t)$ with a sampling frequency that is smaller than the frequency of the signal received by receiving antennas.

The optional fast time mean removal act 920 may involve removing the direct current (DC) component from the sampled received signal in the fast time domain. The DC component is the average of the signal over a period, and removing it may help in focusing on the variations caused by targets, which may improve the dynamic range of the detected signals.

In the range FFT 930, the sampled signal, with the mean removed optionally, is then processed through a Fast Fourier Transform in the fast time domain. This transforms the signal from the time domain into the frequency domain, with the resulting frequency spectrum indicating the beat frequencies that correspond to the range of targets.

The optional slow time MTI 940 may be performed across multiple chirps to suppress echoes from stationary targets. The slow time refers to the time across several chirps. MTI can be implemented using methods like differencing or filtering, to highlight moving targets while reducing the impact of clutter from stationary objects.

In the Doppler FFT 950, a Fast Fourier Transform may be applied in the slow time domain, which helps determine the Doppler frequency shift of each target. This shift is directly related to the velocity of the target relative to the radar. The Doppler FFT may separate targets not only by range but also by their relative speed. The combination of Range FFT and Doppler FFT allows for the creation of a range-Doppler map. Based on the range Doppler map, the proposed clutter identification and localization 960 may be performed.

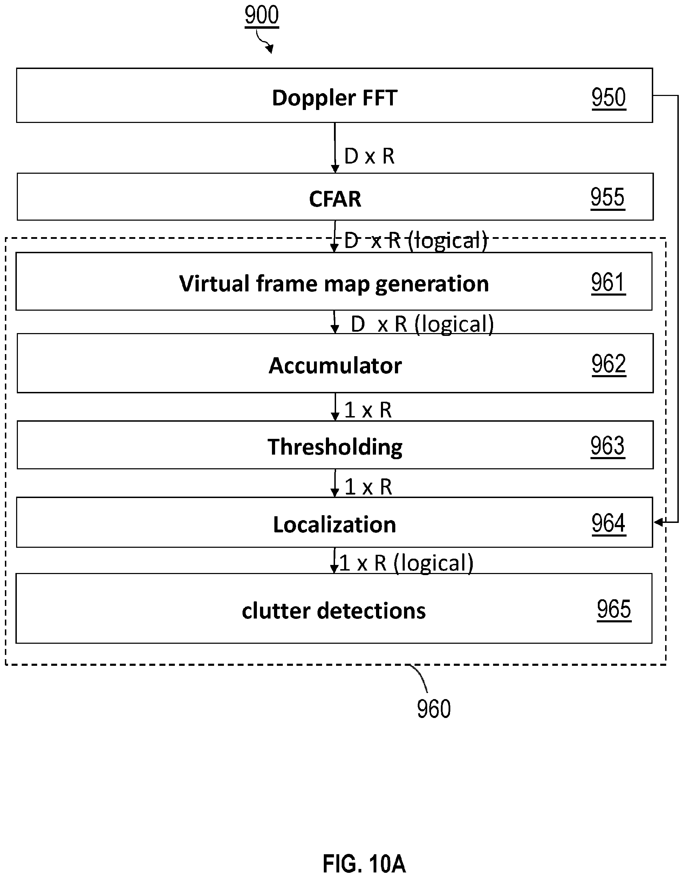

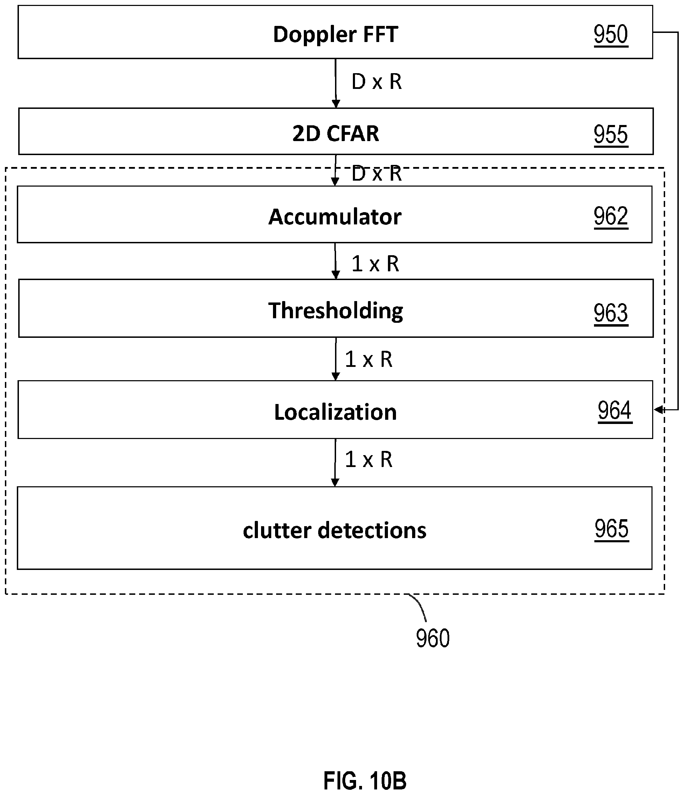

Two alternatives of clutter identification and localization 960 are shown in Figs. 10A and 10B.

After Doppler FFT 950, CFAR 955 may be performed to obtain a binary range-Doppler map. CFAR (Ordered Statistics CFAR or Cell Averaging CFAR) is used to identify the targets from the noise floor. Result of CFAR is a logical output of dimension D x R per receiver. Output of multiple receivers can be combined at this stage either using OR operation or even combine receivers before CFAR.

The variant of clutter identification and localization 960 shown in **Fig. 10A** comprises an act 961 of virtual frame map generation. A virtual frame is used to store logical output of CFAR over a period of a frame (sliding window) defined by the virtual frame length. Virtual frame map may be of dimension $F \times R$. A range bin may be set to true if a target is detected in any of its Doppler bins otherwise may be set to false. By doing so, CFAR logical output may be mapped to a logical output vector of size 1 $\times R$. Since the method is storing only logical values of last few frames (say, 10 to 50 frames), memory requirement to implement the feature is very cheap compared to other approaches.

Accumulating 962 the $F$ vectors 510-1, ..., 510-$F$ of the virtual frame map comprises combining the logical values in the virtual frame by an OR operation and generate a logical vector 530' of length $R$. The accumulator is also of length $R$. Its value may be incremented if any target detected on the logical vector created in the above step otherwise decrement the counter to obtain accumulated vector 540.

Thresholding 963 may be applied on the accumulator values. Those range bins where accumulator values reaching a particular threshold may be set to be set to true indicating that there is a moving clutter otherwise set to false.

If multiple range bins are identified as clutters, localization 694 of clutter bins may be done by calculating the local maxima on the Doppler FFT output. Localization output may also be a logical value indicating the range bins identified as clutter. Time taken to identify clutter may be in the range of 2 - 5 seconds. Thresholding can be adjusted to gain confidence against different type of moving clutters such as trees, fans, ventilators, vibrations introduced by the walls etc.

The variant of clutter identification shown in Fig. 10A uses virtual frame length of length $F > 1$, the variant of clutter identification shown in **Fig. 10B** uses no virtual frame (same as virtual frame length $F = 1$). In the variant of clutter identification shown in Fig. 10B, increment and decrement step of accumulator and threshold value can be adjusted to get approximately same results as the variant of clutter identification shown in Fig. 10A.

Approximately the same results can be achieved using different variant with some latency. In variant of Fig. 10A, virtual frame length = 100, increment and decrement step of 1. In variant of Fig. 10A, virtual frame length = 10, increment step of 10 and decrement step of 1. In variant of Fig. 10B, virtual frame length = 1, increment step of 1 and decrement step of 0.1. In variant of Fig. 10B, virtual frame length = 1, increment step of 10 and decrement step of 1.

When a source of clutter has been detected in the field of view of the radar device, the radar device 100 may switch to a low-power-mode to reduce the amount of power the radar device 100 consumes. To save power, the radar device 100 may lower its performance. This could mean reducing the processor's speed, lowering screen brightness, or turning off various peripheral components, for example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A radar device (100; 140) configured to

   determine, for at least one radar frame which includes a plurality of chirps emitted by a radar device, a range-Doppler map (500),
   wherein range bins along a first dimension of the range-Doppler map (500) represent ranges relative to the radar device and Doppler bins along a second dimension of the range-Doppler map (500) represent Doppler-shifts;
   for each of the range bins, combine the Doppler bins associated with the respective range bin to generate a vector (510; 530; 530'; 540) indicating whether or not a target is detected in any of the corresponding Doppler bins; and
   based on the vector (510; 530; 530'; 540), determine whether a source of clutter is present within a field of view of the radar device and a location of the source of clutter in said field of view.

2. The radar device (100; 140) of claim 1, configured to for each of the range bins, combine the Doppler bins associated with the respective range bin by a logical OR-operation to generate the vector (510).

3. The radar device (100; 140) of claim 1 or 2, configured to

   determine, for a plurality of radar frames, a plurality of respective vectors (510) based on the respective range-Doppler maps; and
   combine the plurality of vectors (510) to determine whether the source of clutter is present and the location of the source of clutter.

4. The radar device (100; 140) of claim 3, configured to

   accumulate the plurality of vectors (510) to obtain an accumulated vector (530; 530'; 540); and determine the presence of the source of clutter within a range bin in response to an entry of the accumulated vector (530; 530'; 540) and associated with the range bin exceeding a predefined threshold.

5. The radar device (100; 140) of claim 3 or 4, configured to

determine, for a first plurality of radar frames, a first plurality of respective vectors (510) based on the respective range-Doppler maps;
combine the first plurality of vectors (510) to obtain a first vector (530'-1) for the first plurality of radar frames;
determine, for at least a second plurality of radar frames, a second plurality of respective vectors (510) based on the respective range-Doppler maps;
combine the second plurality of vectors (510) to obtain a second vector (530'-2) for the second plurality of radar frames;
accumulate the first and the second vectors to obtain an accumulated vector (540); and
determine the presence of the source of clutter within a range bin in response to an entry of the accumulated vector (540) and associated with the range bin exceeding a predefined threshold.

6. The radar device (100; 140) of claim 4 or 5, configured to
accumulate the vectors (510; 530') by incrementing an entry of the accumulated vector by a first value if the respective entry of a newly accumulated vector has a first vector value and by decrementing the entry of the accumulated vector by a second value if the respective entry of the newly accumulated vector has a second vector value.

7. The radar device (100; 140) of claim 6, wherein the first and the second values are different values.

8. The radar device (100; 140) of claim 7, wherein the first value is larger than the second value.

9. The radar device (100; 140) of any one of the previous claims, configured to
cause a low-power-mode of the radar device (100; 140) to be activated in response to a source of clutter having been detected in the field of view of the radar device.

10. The radar device (100; 140) of any one of the previous claims, further comprising

a transmitter configured to transmit the at least one radar frame comprising a plurality of transmit FMCW chirps; and
a receiver configured to receive one or more echo signals of the radar frame from the one or more radar targets and mix the one or more echo signals with the transmit FMCW chirps to obtain a beat signal for the radar frame.

11. The radar device (100; 140) of claim 10, configured to

perform, for each FMCW chirp of the radar frame, a range FFT of the beat signal to obtain the range bins of a range-Doppler map; and
perform, for each range bin, a Doppler FFT on the FMCW chirps of the radar frame to obtain the Doppler bins of the range-Doppler map.

12. The radar device (100; 140) of claim 11, configured to perform Constant False Alarm Rate, CFAR, processing on the range-Doppler map to obtain the range-Doppler map.

13. A radar processing method, comprising

determining, for at least one radar frame which includes a plurality of chirps emitted by a radar device, a range-Doppler map,
wherein range bins along a first dimension of the range-Doppler map represent ranges relative to the radar device and Doppler bins along a second dimension of the range-Doppler map represent Doppler-shifts;
for each of the range bins, combining the Doppler bins associated with the respective range bin to generate a vector indicating whether or not a target is detected in any of the corresponding Doppler bins; and
based on the vector, determining whether a source of clutter is present within a field of view of the radar device and a location of the source of clutter in said field of view.

**Amended claims in accordance with Rule 137(2) EPC.**

1. A radar device (100; 140) configured to

determine, for at least one radar frame which includes a plurality of chirps emitted by a radar device, a range-Doppler map (500), wherein determining the range-Doppler map (500) comprises performing Moving Target Indication, MTI, in slow time;
wherein range bins along a first dimension of the range-Doppler map (500) represent ranges relative to the radar device and Doppler bins along a second dimension of the range-Doppler map (500) represent Doppler-shifts;

for each of the range bins, combine the Doppler bins associated with the respective range bin to generate a vector (510; 530; 530'; 540) indicating whether or not a target is detected in any of the corresponding Doppler bins; and based on the vector (510; 530; 530'; 540), determine whether a source of moving clutter is present within a field of view of the radar device and a location of the source of moving clutter in said field of view.

2. The radar device (100; 140) of claim 1, configured to for each of the range bins, combine the Doppler bins associated with the respective range bin by a logical OR-operation to generate the vector (510).

3. The radar device (100; 140) of claim 1 or 2, configured to

determine, for a plurality of radar frames, a plurality of respective vectors (510) based on the respective range-Doppler maps; and combine the plurality of vectors (510) to determine whether the source of moving clutter is present and the location of the source of moving clutter.

4. The radar device (100; 140) of claim 3, configured to

accumulate the plurality of vectors (510) to obtain an accumulated vector (530; 530'; 540); and determine the presence of the source of moving clutter within a range bin in response to an entry of the accumulated vector (530; 530'; 540) and associated with the range bin exceeding a predefined threshold.

5. The radar device (100; 140) of claim 3 or 4, configured to

determine, for a first plurality of radar frames, a first plurality of respective vectors (510) based on the respective range-Doppler maps; combine the first plurality of vectors (510) to obtain a first vector (530'-1) for the first plurality of radar frames; determine, for at least a second plurality of radar frames, a second plurality of respective vectors (510) based on the respective range-Doppler maps; combine the second plurality of vectors (510) to obtain a second vector (530'-2) for the second plurality of radar frames; accumulate the first and the second vectors to obtain an accumulated vector (540); and determine the presence of the source of moving clutter within a range bin in response to an entry of the accumulated vector (540) and associated with the range bin exceeding a predefined threshold.

6. The radar device (100; 140) of claim 4 or 5, configured to accumulate the vectors (510; 530') by incrementing an entry of the accumulated vector by a first value if the respective entry of a newly accumulated vector has a first vector value and by decrementing the entry of the accumulated vector by a second value if the respective entry of the newly accumulated vector has a second vector value.

7. The radar device (100; 140) of claim 6, wherein the first and the second values are different values.

8. The radar device (100; 140) of claim 7, wherein the first value is larger than the second value.

9. The radar device (100; 140) of any one of the previous claims, configured to cause a low-power-mode of the radar device (100; 140) to be activated in response to a source of moving clutter having been detected in the field of view of the radar device.

10. The radar device (100; 140) of any one of the previous claims, further comprising

a transmitter configured to transmit the at least one radar frame comprising a plurality of transmit FMCW chirps; and a receiver configured to receive one or more echo signals of the radar frame from the one or more radar targets and mix the one or more echo signals with the transmit FMCW chirps to obtain a beat signal for the radar frame.

11. The radar device (100; 140) of claim 10, configured to

perform, for each FMCW chirp of the radar frame, a range FFT of the beat signal to obtain the range bins of a range-Doppler map; and perform, for each range bin, a Doppler FFT on the FMCW chirps of the radar frame to obtain the Doppler bins of the range-Doppler map.

12. The radar device (100; 140) of claim 11, configured to perform Constant False Alarm Rate, CFAR, processing on the range-Doppler map to obtain the range-Doppler map.

13. A radar processing method, comprising

determining, for at least one radar frame which includes a plurality of chirps emitted by a radar device, a range-Doppler map, wherein determining the range-Doppler map comprises performing Moving Target Indication, MTI, in slow time;

wherein range bins along a first dimension of the range-Doppler map represent ranges relative to the radar device and Doppler bins along a second dimension of the range-Doppler map represent Doppler-shifts;

for each of the range bins, combining the Doppler bins associated with the respective range bin to generate a vector indicating whether or not a target is detected in any of the corresponding Doppler bins; and

based on the vector, determining whether a source of moving clutter is present within a field of view of the radar device and a location of the source of moving clutter in said field of view.

**FIG. 1**

**FIG. 2**

FIG. 3

FIG. 4

FIG. 5

FIG. 6

FIG. 7

530'-1

| 1 | 1 | 1 | 1 | 0 | 1 | 0 | 1 | 0 | 1 |
|---|---|---|---|---|---|---|---|---|---|
| 1 | 2 | 3 | | ... | | | | R-1 | R |

→ range

530'-2

| 1 | 0 | 1 | 0 | 0 | 1 | 0 | 1 | 0 | 0 |
|---|---|---|---|---|---|---|---|---|---|
| 1 | 2 | 3 | | ... | | | | R-1 | R |

→ range

540

| 2 | 0.5 | 2 | 0.5 | 0 | 2 | 0 | 2 | 0 | 0.5 |
|---|-----|---|-----|---|---|---|---|---|-----|
| 1 | 2 | 3 | | ... | | | | R-1 | R |

**FIG. 8**

| ADC data | 910 |

↓

| Fast time mean removal | 920 |

↓

| Range FFT | 930 |

↓

| Slow time MTI | 940 |

↓

| Doppler FFT | 950 |

↓

| Clutter identification & localization | 960 |

FIG. 9

<u>900</u>

| Doppler FFT | <u>950</u> |

↓ D x R

| CFAR | <u>955</u> |

↓ D x R (logical)

| Virtual frame map generation | <u>961</u> |

↓ D x R (logical)

| Accumulator | <u>962</u> |

↓ 1 x R

| Thresholding | <u>963</u> |

↓ 1 x R

| Localization | <u>964</u> |

↓ 1 x R (logical)

| clutter detections | <u>965</u> |

960

**FIG. 10A**

| Doppler FFT | 950 |
| --- | --- |

D x R

| 2D CFAR | 955 |
| --- | --- |

D x R

| Accumulator | 962 |
| --- | --- |

1 x R

| Thresholding | 963 |
| --- | --- |

1 x R

| Localization | 964 |
| --- | --- |

1 x R

| clutter detections | 965 |
| --- | --- |

960

**FIG. 10B**

**EP 4 617 712 A1**

Europäisches
Patentamt

European
Patent Office

Office européen
des brevets

# EUROPEAN SEARCH REPORT

**Application Number**

EP 24 16 2793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 189 573 A (54TH RES INST CHINA ELECTRONICS TECH GROUP CORP) 30 July 2021 (2021-07-30) * the whole document * | 1-13 | INV. G01S7/41 G01S13/34 G01S13/58 G01S13/536 |
| A | GB 2 141 302 A (MARCONI CO LTD) 12 December 1984 (1984-12-12) * figure 2 * * page 1, line 6 - page 2, line 13 * | 1-13 | G01S13/538 ADD. G01S7/292 |
| A | US 9 229 102 B1 (WRIGHT DONALD CHARLES [US] ET AL) 5 January 2016 (2016-01-05) * abstract * * column 37, line 47 - column 39, line 14 * * column 41, lines 17-49 * | 1-13 | G01S13/42 G01S13/931 |
| A | KIM JIHYE ET AL: "Two-Stage Clutter Suppression Method for Human Detection Using FMCW Radar", 2023 IEEE RADAR CONFERENCE (RADARCONF23), IEEE, 1 May 2023 (2023-05-01), pages 1-6, XP034361360, DOI: 10.1109/RADARCONF2351548.2023.10149619 [retrieved on 2023-06-21] * figures 1, 2 * * page 1, left-hand column, lines 1-17 * * page 1, right-hand column, line 27 - page 2, right-hand column, line 5 * * page 2, right-hand column, line 30 - page 4, right-hand column, line 5 * | 1-13 | |

**TECHNICAL FIELDS SEARCHED (IPC)**

G01S

The present search report has been drawn up for all claims

| Place of search | Date of completion of the search | Examiner |
|---|---|---|
| Munich | 27 August 2024 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                        

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 2793

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2024

| Patent document cited in search report | | Publication date | Patent family member(s) | Publication date |
|---|---|---|---|---|
| CN 113189573 | A | 30-07-2021 | NONE | |
| GB 2141302 | A | 12-12-1984 | NONE | |
| US 9229102 | B1 | 05-01-2016 | NONE | |

For more details about this annex : see Official Journal of the European Patent Office, No. 12/82

EPO FORM P0459